# EUROPEAN PATENT APPLICATION

(11) **EP 4 635 378 A1**
(43) Date of publication of application: **22.10.2025**
(21) Application number: 25169267.9
(22) Date of filing: 08.04.2025
(51) Int. Cl.: A47J 31/36, A47J 31/42, A47J 31/52

(54) **METHOD FOR DISPENSING A COFFEE-BASED BEVERAGE**

(30) Priority: 15.04.2024 IT 202400008545
(71) Applicant: CMA Macchine per Caffè S.r.l., 31058 Susegana (TV) (IT)
(72) Inventor: Piovesan, Mattia, 31058 Susegana (TV) (IT); Erba, Roberto, 31058 Susegana (TV) (IT); Marioni, Matteo, 31058 Susegana (TV) (IT); Marchesini, Luca, 31058 Susegana (TV) (IT)
(74) Representative: Cammareri, Emanuele

(57) **Abstract**

A method for dispensing a coffee-based beverage in a coffee machine (M) provides for the sequential execution of the operating phases of: slidingly moving a filter holder element (PF) in a substantially horizontal and longitudinal direction to said machine (M) to bring it to a determined operational position completely within said coffee machine (M); detecting and controlling the position and/or parts of said filter holder element (PF); displaying predefined brewing options on a display screen of said coffee machine (M) and selecting a choice; depositing a dose of ground coffee onto said filter holder element (PF) of said coffee machine (M); carrying out vertical pressing of said dose of ground coffee on said filter holder element (PF); diffusing hot water over said dose of ground and pressed coffee; and dispensing by extraction the chosen beverage thus obtained.

## Description

The present invention relates to a method for dispensing a hot beverage.

In particular, the present invention is advantageously used in the field of public catering establishments such as bars or equivalent establishments, in the production by extraction of a hot coffee-based liquid beverage to which the following description will explicitly refer without losing generality.

In the catering and similar sector, it is universally known, for example as described in US 9578986 B2 granted to the same Applicant, the use of a machine for producing hot coffee-based beverages which substantially comprises at least one motorized group for grinding coffee beans, at least one percolation unit of each machine suitable for producing and dispensing liquid coffee starting from ground and pressed coffee powder, and at least one touch screen or button screen through which it is possible to choose the blend or quality of coffee (for example Arabica, etc.) and/or type of dispensing, such as espresso, ristretto coffee, long coffee, intense coffee, decaffeinated, etc.

The aforementioned percolation unit also includes a slide-type filter holder element which is filled with appropriately pressed doses of ground coffee powder and a release group for the diffusion of hot water on the aforementioned filter holder element to thus create, by extraction, the type of coffee-based beverage chosen and to be dispensed through a spout carried by the same filter holder, into cups, mugs, glasses or equivalent containers.

The object of the present invention is to provide, in a coffee machine of the known type described above, a methodology for dispensing a coffee-based beverage that is effective, improved and precise.

In particular, an object of the present invention is to provide a methodology for dispensing a coffee-based beverage according to which, in a coffee machine of the known type described above, it is possible to advantageously interrupt a dispensing cycle already activated in order to keep the operator safe, avoiding the risk of injury, in particular to the hands, in the event of unwanted contact with the operating parts of the coffee machine.

The structural and functional characteristics of the methodology of the present invention and its advantages over the known art will be even clearer and more evident from the claims below, and in particular from an examination of the following description referred to the attached drawings, which show the schematic representations of a preferred but not limiting embodiment of a coffee machine implementing the methodology in question and a block diagram of the methodology itself, in which:
- Figures 1A, 1B and 1C show, in respective schematic perspective views with covering parts removed for the sake of clarity, the structural components in three operating positions of a coffee machine implementing the methodology in question; and
- Figure 2 represents a block diagram summarizing the methodology in question of the present invention.

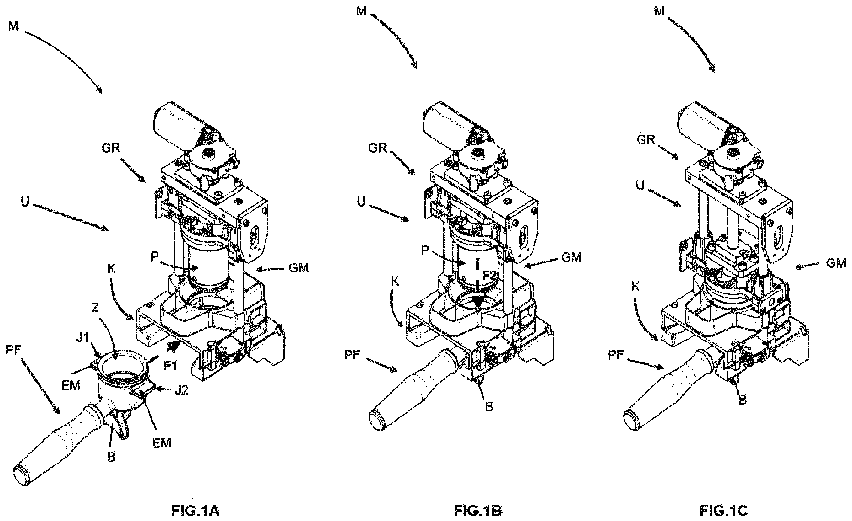

With explicit reference to Figures 1A, 1B and 1C, M globally indicates a coffee machine implementing the methodology in question, and comprising, substantially, a motorized unit GM in which a pressing piston P is able to press ground coffee, a percolation unit U able to produce and dispense liquid coffee starting from ground coffee powder pressed by the unit GM, and a touch screen or button screen (known and not illustrated) through which it is possible to select the coffee blend and/or type of dispensing.

Preferably but not limited to, according to the methodology of the present invention, the user has from screen the possibility of (at least) three predefined coffee brewing/mixing choice options, depending on the detection by magnetic sensors, located on the unit GM, of appropriate magnetic EM recognition elements on the end fins J1 and J2 of the chosen filter holder element PF.

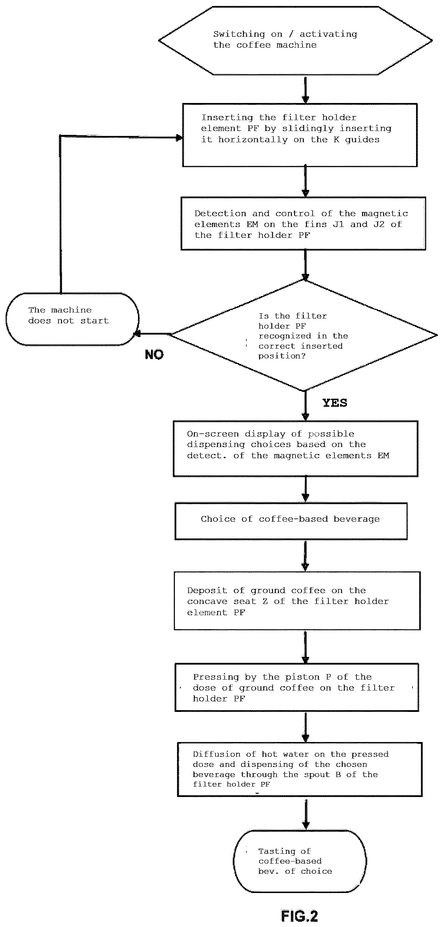

The percolation unit U comprises a filter holder element PF of the known slide-in type within the machine M itself sliding, horizontally and longitudinally to the machine M, along a pair of guides K, and a concave Z seat of which is apt to be filled with doses of ground coffee, as well as a diffuser group GR for the diffusion of hot water under pressure on the filter holder element PF containing the dose of ground coffee which is then pressed by the presser group GR in order to obtain, by extraction, the type of hot coffee-based beverage chosen and to be dispensed through a relative spout B; said spout being carried in its lower part by the same filter holder PF inside cups, mugs, glasses or equivalent containers (known and not illustrated). As better illustrated in the block diagram shown in figure 2, the innovative methodology in question for the dispensing of a coffee-based beverage provides the execution of the following operating phases in sequence:
- switching on/activating the machine;
- substantially horizontal and longitudinal movement (arrow F1 in figure 1A) of the filter holder element PF by sliding it inside the machine M completely all the way down along the aforementioned guides K, below the pressing unit GM and the hot water diffusion unit GR;
- detecting and controlling the magnetic elements EM located on the fins J1 and J2 of the filter holder PF: the elements EM can be correctly detected, if and only if, the type of the filter-holder element PF is correctly recognized and/or the filter holder PF is correctly and fully slidingly inserted along the guides K; the following phase of on-screen display of possible brewing choices (e.g. possible coffee blends/recipes) can then take place according to the aforementioned detection and control of the elements EM and then, following the beverage choice, the depositing of a dose of ground coffee onto the concave seat Z of the slide-type filter-holder element PF can take place along with the immediately following pressing phase of the dose of ground coffee arranged on the seat Z of the filter-holder PF which takes place by means of the piston P in the vertical direction and orthogonal to the slides K (arrow F2 in Figure 1B);
- diffusing of hot water on the dose of ground and pressed coffee on the filter holder PF and subsequent dispensing of the chosen hot beverage through the spout B of the filter holder PF itself onto the container placed under the spout B itself for a final tasting of the hot beverage.

Therefore, it follows that, in use, an interruption of the operational cycle of beverage preparation can occur by the operator removing the filter holder PF exclusively during a transient period in the initial part of the operational cycle, i.e., from the instant the button on the screen is pressed to when the piston P, in descent, engages the filter holder PF.

During this transitional period, it is possible to pull the filter holder PF out of its inserted position, and if this happens, the machine M will stop the vertical movement of the piston P by aborting the cycle in progress in order to prevent the operator from putting his or her fingers in the mirror of the piston P descent, risking accidents that could compromise the operator's safety.

In other words, it is intended to highlight that this methodology is able to advantageously place the operator in safety through two types of control: a) the first control is an electromechanical safety switch (independent of the control unit that the machine M has) that enables and activates the motor of the group GM to move the piston P vertically only when the filter holder PF is in position at the bottom of the slides K. In the event that the filter holder PF is extracted, the power supply to the motor of the group GM ceases, preventing any movement and preserving the physical safety of the operator; b) the second type of control is based on the use of the pair of magnetic sensors that detect the presence/absence of the magnets EM located on the fins J1 and J2 of the filter holder PF through which the presence of the filter holder PF itself and which type of filter holder PF is inserted (at least a choice of three possibilities) is detected.

Once the type of PF filter holder has been identified, the machine M offers the operator only the beverages associated with that specific type of filter holder PF, thus preventing the operator/user from making the wrong choice.

By means of the above-mentioned magnetic sensors, it is possible to check and, if necessary, notify the operator of any positioning errors that may prevent the cycle from being implemented, such as, for example, the filter holder PF being pulled out while the cycle is in progress, a situation that requires repositioning of the filter holder PF or cancellation of the cycle itself, at the operator's discretion.

## Claims

1. Method for dispensing a coffee-based beverage in a coffee machine (M), **characterized in that** it comprises the sequential execution of the operating phases of:
- sliding a filter holder element (PF) in a substantially horizontal and longitudinal direction to said machine (M) to bring it to a determined operating position completely inside said coffee machine (M);
- detecting and controlling the position and/or parts (J1, J2) of said filter holder element (PF);
- displaying predefined dispensing options on a display screen of said coffee machine (M) and selecting a choice; said display being activated only following said control of the correct position and/or detection of parts (J1, J2) of said filter holder element (PF);
- depositing a dose of ground coffee on said filter holder element (PF) of said coffee machine (M);
- pressing said dose of ground coffee vertically onto said filter holder element (PF);
- spreading hot water onto said dose of ground and pressed coffee and dispensing by extraction the chosen beverage thus obtained.

2. Method according to claim 1, **characterized in that** said detection and control comprises detecting and controlling the correct complete positioning of said filter holder element (PF) inside said coffee machine (M).

3. Method according to one or more of the preceding claims 1 to 2, **characterized in that** said detection and control comprises detecting and controlling magnetic elements (EM) located on parts (J1, J2) of said filter holder element (PF).
